# EUROPEAN PATENT APPLICATION

(11) **EP 0 625 533 A1**
(43) Date of publication of application: **23.11.1994**
(21) Application number: 94303383.7
(22) Date of filing: 11.05.1994
(51) Int. Cl.: C08G 77/20, C08G 77/46

(54) **Radiation curable siloxane compositions containing vinyl ether functionality and methods for their preparation**

(30) Priority: 18.05.1993 US 63616
(71) Applicant: DOW CORNING CORPORATION, Midland Michigan 48686-0994 (US)
(72) Inventor: Pertz, Susan Victoria, Essexville, Michigan (US); Glover, Shedric ONeal, Midland, Michigan (US); Dill, Timothy Jon, Saginaw, Michigan (US)
(74) Representative: Vandamme, Luc Johan Roger

(57) **Abstract**

The present invention relates to radiation curable silicone vinyl ethers and methods for preparing silicone vinyl ethers. More particularly, the present invention relates to compositions containing vinyl ether functional silicones and to the preparation and use of silicone vinyl ethers which are curable by addition of photocleavable acids and exposure to ultraviolet or electron beam radiation.

## Description

The present invention relates to compositions containing vinyl ether functional silicones and to their preparation and to their use. Silicone vinyl ethers are curable by addition of photocleavable acids and exposure to ultraviolet or electron beam radiation.

Alkenyl ether functional organosilicon compounds have been described in the art. For example, U.S. Patent No. 4,617,238 discloses a photopolymerizable composition wherein only one vinyl ether group for each SiH group is incorporated into the siloxane molecule at any given time.

Other alkenyloxy functional organosilicon compounds are described in U.S. Patent Nos. 4,707,503; 5,057,549; 5,039,176 and EP Patent No. 0 462 389.

The methods of the above documents rely on competition between the vinyl ether group and other alkenyl groups within the same compound and do not result in quantitative conversion of SiH to vinyl ether. In contrast, the method of the present invention yields quantitative conversion of hydridosilane or siloxanes to vinyl ether, a preferred radiation sensitive group.

The present invention provides a method for making vinyl ether functional siloxane. The method comprising: (I) mixing a silane or siloxane, a vinyl ether compound and a hydrosilylation catalyst. In another embodiment, the present invention adds a photocleavable acid to the reaction product of (I), applies this mixture (II) to a solid substrate to form a coating and then exposes the coating to actinic radiation or a combination of actinic radiation and heat. The invention further relates to a vinyl ether functional polysiloxane compound and to a curable composition comprising this polysiloxane compound in combination with a photo-cleavable acid.

It is an object of the present invention to provide a novel method of preparing UV (ultraviolet) or EB (electron beam) curable organopolysiloxanes suitable for paper release applications.

It is also an object of the present invention to produce silicone vinyl ether copolymers or oligomers which are curable by addition of photocleavable acids and exposure to UV or EB radiation.

It is a further object of this invention to provide UV- curable silicone compositions which may be catalyzed by a variety of curing catalysts at especially rapid cure rates.

Thus, a method of making a vinyl ether functional siloxane comprises (I) mixing (A) a silicon compound selected from (i) silanes and (ii) siloxanes; (B) a vinyl ether compound selected from (a) H₂C=CHOROCH=CH₂, (b) (H₂C=CHOR)ₓCR¹₄₋ₓ and (c) a mixture thereof; and (C) a hydrosilylation catalyst, wherein R is a divalent hydrocarbon or halohydrocarbon radical having from 1 to 20 carbon atoms, R¹ is a monovalent hydrocarbon or halohydrocarbon radical having from 1 to 20 carbon atoms or hydrogen atom, x has a value of 3 or 4 and the silane or siloxane each contain at least one silicon bonded hydrogen atom in a molecule and wherein the molar ratio of vinyloxy containing molecules to silicon bonded hydrogen atoms is greater than 1.0.

The method of the present invention comprises mixing a silane or siloxane, a vinyl ether compound and a hydrosilylation catalyst. The silane preferably has the formula (R²O)ₓSiR³₄₋ₓ wherein R² is a monovalent hydrocarbon or halohydrocarbon radical having from 1 to 8 carbon atoms, R³ is hydrogen atom or R² and x has a value from 1 to 3. It is also required that the silane or siloxane contain at least one silicon-bonded hydrogen atom in the molecule.

Monovalent hydrocarbon radicals of R² include alkyl radicals, such as methyl, ethyl, propyl, butyl, hexyl and octyl; cycloaliphatic radicals, such as cyclohexyl; aryl radicals, such as phenyl, tolyl and xylyl; aralkyl radicals, such as benzyl and phenylethyl; and olefinic hydrocarbon radicals, such as vinyl, allyl, methallyl, butenyl and hexenyl, octenyl, cyclohexenyl and styryl. Alkenyl radicals are preferably terminally unsaturated. Highly preferred monovalent hydrocarbon radicals are methyl, phenyl, vinyl and 5- hexenyl. Monovalent halohydrocarbon radicals free of aliphatic unsaturation include any monovalent hydrocarbon radical noted above which is free of aliphatic unsaturation and has at least one hydrogen atom replaced with a halogen, such as fluorine, chlorine or bromine. Preferred monovalent halohydrocarbon radicals have the formula CₙF₂ₙ₊₁CH₂CH₂- wherein the subscript n has a value of from 1 to 8, such as CF₃CH₂CH₂- and C₄F₉CH₂CH₂-. The several R radicals can be identical or different. R³ is a hydrogen atom or R as delineated above.

The amount of silane employed in the present invention varies depending on the amount of vinyl ether compound andhydrosilylation catalyst employed. It is preferred that from 2 to 25 weight percent of silane be used, and it is highly preferred that from 3 to 15 weight percent be employed, said weight percent being based on the total weight of the composition.

The siloxane of the present invention is preferably an organohydrogensilicon compound which is free of aliphatic unsaturation and contains two or more silicon atoms linked by divalent radicals, an average of from one to two silicon-bonded monovalent radicals per silicon atom and an average of at least one and preferably two, three or more, silicon-bonded hydrogen atoms per molecule. Preferably, this siloxane contains an average of three or more silicon-bonded hydrogen atoms such as 5, 10, 20, 40 and more.

The siloxane of this invention is preferably an organohydrogenpolysiloxane having the average unit formula Rₐ³H_{b}SiO_{(4-a-b)/2} wherein R³ denotes a monovalent radical free of aliphatic unsaturation, the subscript b has a value of from greater than 0 to 1, such as 0.001, 0.01, 0.1 and 1.0 and the sum of the subscripts a plus b has a value of from 1 to 3, such as 1.2, 1.9 and 2.5. Siloxane units in the organohydrogenpolysiloxanes having the average unit formula above have the formulae R₃³SiO_{1/2}, R₂³HSiO_{1/2}, R₂³SiO_{2/2}, R³HSiO_{2/2}, R³SiO_{3/2}, HSiO_{3/2} and SiO_{4/2}. Said siloxane units can be combined in any molecular arrangement such as linear, branched, cyclic and combinations thereof, to provide organohydrogenpolysiloxanes that are useful in the present invention.

A preferred organohydrogenpolysiloxane is a substantially linear organohydrogenpolysiloxane having the formula XR₂SiO(XRSiO)_{c}SiR₂X wherein each R denotes a monovalent hydrocarbon or halohydrocarbon radical free of aliphatic unsaturation and having from 1 to 20 carbon atoms. Monovalent hydrocarbon radicals include alkyl radicals, such as methyl, ethyl, propyl, butyl, hexyl and octyl; cycloaliphatic radicals, such as cyclohexyl; aryl radicals, such as phenyl, tolyl and xylyl; aralkyl radicals, such as benzyl and phenylethyl; and olefinic hydrocarbon radicals, such as vinyl, allyl, methallyl, butenyl and hexenyl, octenyl, cyclohexenyl and styryl. Alkenyl radicals are preferably terminally unsaturated. Of the higher alkenyl radicals, those selected from 5-hexenyl, 7-octenyl and 9-decenyl are preferred because of the ready availability of the alpha, omega-dienes that can be used to prepare the alkenylsiloxanes. Highly preferred monovalent hydrocarbon radical for the silicon-containing components of this invention are methyl, phenyl, vinyl and 5-hexenyl. Monovalent halohydrocarbon radicals free of aliphatic unsaturation include any monovalent hydrocarbon radical which is free of aliphatic unsaturation and has at least one of its hydrogen atoms replaced with a halogen, such as fluorine, chlorine or bromine. Preferred monovalent halohydrocarbon radicals have the formula CₙF₂ₙ₊₁CH₂CH₂- wherein the subscript n has a value of from 1 to 10, such as CF₃CH₂CH₂- and C₄F₉CH₂CH₂-. The several R radicals can be identical or different. Additionally, each X denotes a hydrogen atom or an R radical. Of course, at least two X radicals must be hydrogen atoms. The value of the subscript c is not critical; however, it is preferably such that the organohydrogenpolysiloxane has a viscosity at 25°C. of up to 100 millipascal-seconds. The exact value of y needed to provide a viscosity value falling within said limits depends upon the number and identity of the R radicals; however, for organohydrogenpolysiloxanes containing only methyl radicals as R, c will have a value of from 0 to 100.

In terms of preferred monovalent hydrocarbon radicals, examples of organopolysiloxanes which are suitable as the siloxane include HMe₂SiO(Me₂SiO)_{c}SiMe₂H, (HMe₂SiO)₄Si, cyclo(MeHSiO)_{c}, (CF₃CH₂CH₂)MeHSiO{Me(CF₃CH₂CH₂)SiO_{c}SiHMe- (CH₂CH₂CF₃), Me₃SiO(MeHSiO)_{c}SiMe₃, HMe₂SiO(Me₂SiO)_{0.5c}(MeHSiO)_{0.5c} SiMe₂H, HMe₂SiO(Me₂SiO)_{0.5c}(MePhSiO)_{0.1c} (MeHSiO)_{0.4c}SiMe₂H, Me₃SiO(Me₂SiO)_{0.3c}(MeHSiO)_{0.7c}SiMe₃ and MeSi(OSiMe₂H)₃.

Highly preferred linear organohydrogenpolysiloxanes have the formula YMe₂SiO(Me₂SiO)ₚ(MeYSiO)_{q}SiMe₂Y wherein Y denotes a hydrogen atom or a methyl radical. An average of at least two Y radicals per molecule must be hydrogen atoms. The subscripts p and q can have average values of zero or more and the sum of p plus q has a value equal to c. The disclosure U.S. Patent No. 4,154,714 shows highly-preferred organohydrogenpolysiloxanes.

The amount of siloxane employed in the present invention varies depending on the amount of vinyl ether compound and hydrosilylation catalyst employed. It is preferred that it range from 3 to 75 weight percent of siloxane used, and it is highly preferred that 5 to 50 weight percent be employed, said weight percent being based on the total weight of the composition.

The vinyl ether compound of the present invention is a vinyl ether group having its formula selected from (a) H₂C=CHOROCH=CH₂, (b) (H₂C=CHOR)ₓCR¹₄₋ₓ or (c) a mixture thereof wherein R is a divalent hydrocarbon or halo-hydrocarbon radical having from 1 to 20 carbon atoms or hydrogen atom, R¹ is a monovalent hydrocarbon or halo-hydrocarbon radical having from 1 to 20 carbon atoms and x has a value of 3 or 4. Divalent hydrocarbon radicals suitable as R are exemplified by alkylene radicals, such as methylene, ethylene, trimethylene, 2-methyltrimethylene, pentamethylene, hexamethylene, 3-ethyl-hexamethylene, octamethylene, -CH₂(CH₃)CH-, -(CH2)₄-, -CH₂CH(CH₃)CH₂- and -(CH₂)₁₈-; cycloalkylene radicals such as cyclohexylene; arylene radicals such as phenylene and combinations of divalent hydrocarbon radicals such as benzylene, i.e. -C₆H₄CH₂-.

Examples of suitable divalent halohydrocarbon radicals include any divalent hydrocarbon radical wherein one or more hydrogen atoms have been replaced by halogen, such as fluorine, chlorine or bromine. Preferably divalent halohydrocarbon radicals havethe formula -CH₂CH₂CₙF₂ₙCH₂CH₂- wherein n has a value of from 1 to 10, such as -CH₂CH₂CF₂CF₂CH₂CH₂-. Preferably, R in formula (a) is an alkylene radical having from 6 to 8 carbon atoms, and it is highly preferred that R in formula (a) is selected from hexylene and cyclohexyldimethylene. Most preferably, R in formula (b) is methylene. The monovalent hydrocarbon radicals of R¹ in formula (b) include those monovalent hydrocarbon or halohydrocarbon radicals delineated above for the siloxane of the present invention, including preferred examples. It is highly preferred in this invention that R¹ be methyl. It is also required for this invention that the molar ratio of vinyloxy containing molecules to silicon-bonded hydrogen atoms is greater than 1.0, and it is highly preferred that this molar ratio be from 3 to 10.

The amount of vinyl ether compound employed in the present invention varies depending on the amount of silane or siloxane and hydrosilylation catalyst employed. It is preferred that from 25 to 98 weight percent of vinyl ether be used, and it is highly preferred that from 50 to 95 weight percent be employed, said weight percent being based on the total weight of the composition.

The hydrosilylation catalyst can be any platinum group metal-containing catalyst which facilitates the reaction of the silicon-bonded hydrogen atoms of the silane or siloxane with the vinyl ether compound. By platinum group it is meant iron, cobalt, nickel, ruthenium, rhodium, palladium, osmium, iridium and platinum. The addition of this catalyst in the mixture of Step I results in the formation of a mixture or reaction product.

The catalyst is preferably a platinum containing catalyst since they are the most widely used and available. They also provide a more favorable effect for the method of this invention in terms of improved pot life and/or cure time. Platinum-containing catalysts can be platinum metal, optionally deposited on a carrier, such as silica gel or powdered charcoal; oracompound or complex of a platinum group metal. A preferred platinum-containing catalyst component in this invention is a form of chloroplatinic acid, either as the commonly available hexahydrate form or as the anhydrous form, as taught by U.S. Patent No. 2,823,218. A particularly useful form of chloroplatinic acid is thatcomposition obtained when it is reacted with an aliphatically unsaturated organosilicon compound such as divinyltetramethyldisiloxane, as disclosed by U.S. Patent No. 3,419,593, because of its easy dispersibility in organosilicon systems. Other platinum catalysts which are useful in the present invention include those disclosed in U.S. Patent Nos. 3,159,601; 3,159,602; 3,220,972; 3,296,291; 3,516,946; 3,814,730 and 3,928,629. The amount of catalyst used in this invention is notnarrowly limited as long as there is a sufficient amount to accelerate a room temperature reaction between the silicon-bonded hydrogen atoms of the silane or siloxane with the vinyl ether compound. The exact amount of catalyst will depend on the particular catalyst utilized and is not easily predictable. However, for platinum containing catalysts the amount can be as low as one part by weight of platinum for every one million parts by weight of the total composition. Preferably the amount is at least 10 parts by weight, on the same basis.

The method of the present invention can further comprise heating the mixture during or after step (I). By heat, it is meant infrared radiation, hot-air and microwave radiation. It is preferred for this invention that the mixture resulting from Step I be heated from room temperature to 150°C. or less, and it is highly preferred that the mixture be heated from 50 to 70°C.

The method of the present invention can further comprise stripping off excess organic vinyl ether after step (I). Methods of stripping volatile components are well known in the art and need no extensive delineation herein. Any method of removing volatile components can be used such as molecular stills, rotoevaporators and wipe film evaporators, with the preferred method being wipe film evaporators.

In another embodiment, the present invention provides a method of making a curable coating composition, the method comprising (I) mixing (A) a silicon compound selected from the group consisting of (i) silanes and (ii) siloxanes, (B) a vinyl ether compound selected from (a) H₂C=CHOROCH=CH₂, (b) (H₂C=CHOR)ₓCR¹₄₋ₓ and (c) a mixture thereof, and (C) a hydrosilylation catalyst, wherein R is a divalent hydrocarbon or halohydrocarbon radical having from 1 to 20 carbon atoms, R¹ is a monovalent hydrocarbon or halohydrocarbon radical having from 1 to 20 carbon atoms or hydrogen atom, x has a value of 3 or 4 and the silane or siloxane each containing at least one silicon bonded hydrogen atom in a molecule and wherein the molar ratio of vinyloxy containing molecules to silicon bonded hydrogen atoms is greater than 1.0, to form a reaction product; (II) adding a photocleavable acid to the reaction product of (I); (III) applying the mixture from (II) to a solid substrate to form a coating; and (IV) exposing the coating to an energy source selected from (i) actinic radiation and (ii) actinic radiation in combination with heat in an amount sufficient to cure the coating.

The silane, siloxane, vinyl ether compound and hydrosilylation catalyst of Step (I) are delineated above for making the vinylether functional siloxanes of this invention, including amounts and preferred examples thereof.

Step (II) comprises adding a photocleavable acid to the reaction product of step (I). Suitable acids for the process of the present invention include onium salts and certain nitrobenzyl sulfonate esters. Preferred are onium salts having the formulae R₂I⁺MXₙ⁻ , R₃S⁺MXₙ⁻, R₃Se⁺MXₙ⁻, R₄P⁺MXₙ⁻ and R₄N⁺MXₙ⁻, wherein R is the same or different organic radicals having from 1 to 30 carbon atoms, including aromatic carbocyclic radicals of from 6 to 20 carbon atoms that are substituted with from 1 to 4 monovalent hydrocarbon radicals selected from alkoxy radicals having from 1 to 8 carbon atoms, alkyl radicals having from 1 to 8 carbon atoms, nitro, chloro, bromo, cyano, carboxy, mercapto and aromatic heterocyclic radicals including pyridyl, thiophenyl and pyranyl. The symbol M in the above formulae are metals or metalloids which include transition metals such as Sb, Fe, Sn, Bi, Al, Ga, In, Ti, Zr, Sc, V, Cr, Mn and Cs; rare earth metals such as the lanthanides, Cd, Pr and Nd; and metalloids such as B, P and As. MXₙ⁻ is a non-basic, non-nucleophilic anion, such as BF₄⁻, PF₆⁻, AsF₆⁻, SbF₆⁻, SbCl₆⁻, HSO₄⁻, ClO₄⁻ , FeCl₄⁼ , SnCl₆⁻ and BiCl₅⁼.

Bis-diaryl iodonium salts, such as bis(dodecyl phenyl) iodonium hexafluoroarsenate and bis(dodecylphenyl) iodonium hexafluoroantimonate and dialkylphenyl iodonium hexafluoroantimonate are preferred.

Nitrobenzyl sulfonate esters which are useful as photocleavable acids in the present invention have the general formula 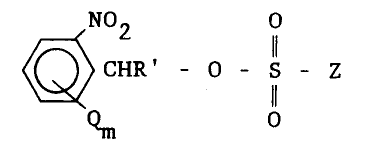
wherein Z is selected from alkyl groups, aryl groups, alkylaryl groups, halogen substituted alkyl groups, halogen substituted aryl groups, halogen substituted alkylaryl groups, nitro substituted aryl groups, nitro substituted alkylaryl groups, aryl groups having nitro and halogen substituents, alkylaryl groups having nitro and halogen substituents and a group having the formula C₆H₄SO₃CHR'C₆H₄₋ₘQₘ(NO)₂, R' is selected from hydrogen atom, methyl and nitro substituted aryl groups, each Q is independently selected from hydrocarbon groups, hydrocarbonoxy groups, NO₂, halogen atoms and organosilicon compounds, m has a value of 0, 1 or 2, with the proviso that Q is not an acidic group. These nitrobenzyl sulfonate photocleavable acids are described in copending U.K. application 9124422.8 filed November 14, 1991. A preferred nitrobenzyl derivative for the present invention is where m has a value of 1, Q denotes a NO₂ group in the ortho position in relation to the -CHR'OS(O)₂Z group and Z denotes a nitrophenyl group, wherein the nitro group is in the para position relative to the sulphonic group or a phenylmethyl group or a trifluoropropylmethylphenyl group.

The photocleavable acids may be present in any proportions which produce curing in the process of this invention. Preferably, the amount of photocleavable acid is from 0.1 to 10 percent by weight based on the total weight of the composition, and it is highly preferred to use between 1 and5 percent by weight based on the total weight of the composition.

Step (III) of this invention comprises applying the mixture from step (II) to a solid substrate to form a coating. In a preferred embodiment, the solid substrate is a flexible sheet material such as paper, polyolefin film and polyolefin-coated paper or foil. Other solid substrates that can be coated by our process include other cellulosic materials such as wood, cardboard and cotton; metallic materials such as aluminum, copper, steel and silver; siliceous materials such as glass and stone; and synthetic polymer materials such as polyolefins, polyamides, polyesters and polyacrylates. The solid substrate can be substantially sheet-like, such as a peelable release liner for pressure sensitive adhesive; a fabric or a foil; or substantially three-dimensional in form.

Step (IV) comprises exposing the coating to an energy source selected from (i) actinic radiation and (ii) actinic radiation in combination with heat in an amount sufficient to cure the coating. By actinic radiation it is meant ultraviolet light; electron beam radiation; and alpha-, beta-, gamma- and x-rays. By heat it is meant infrared radiation, hot-air and microwave radiation. Of course actinic radiation is frequently accompanied by heat and the use of a combination of the two falls within the scope and spirit of the present invention.

Herein the term "cure", generally denotes a chemical change which leads to the composition going from a liquid to a solid. For coating compositions which are used as adhesive-release coatings, the term "cure" has a more detailed meaning which encompasses the absence of smear, migration and rub-off of the coating. Curing may be achieved in any of the known ways, including passing a coated substrate under the desired source of radiation, for example a UV lamp, at a predetermined rate and by exposing a completely coated substrate to radiation by exposure to the required energy source for a predetermined time.

The present invention can further comprise heating the mixture during or after Step (I). By heat it is meant infrared radiation, hot-air and microwave radiation. It is preferred that the mixture resulting from Step I be heated from room temperature to 150°C. or less, and it is highly preferred that the mixture be heated from 50 to 70°C.

The method of this invention can further comprise stripping off excess organic vinyl ether after Step (I) or after Step (II). Methods of stripping volatile components are known in the art and need no extensive delineation herein. Any method can be used and is exemplified by molecular stills, rotoevaporators and wipe film evaporators, with the preferred method being wipe film evaporators.

In another preferred embodiment of this invention, a flexible sheet material, such as paper, metal foil or tapestock, is coated with a thin coating of the liquid curable composition, preferably in a continuous manner and the thus-coated material is then heated and/or irradiated to rapidly cure the coating, to provide a sheetlike material bearing on at least one surface thereof an adhesive-releasing coating. The adhesive-releasing coating is subsequently brought into contact with a pressure sensitive adhesive, preferably in an in-line manner, to form an article having a peelable, i.e. releasable, adhesive/coating interface. Examples of such an article include, adhesive labels having a peelable backing, adhesive tape in roll form and an adhesive packaged in a strippable container. The pressure sensitive adhesive can be non silicone-based, such as the well-known acrylic or rubber types or it can be silicone-based, such as the peroxide- or platinum-curable polydiorganosiloxane-based adhesives.

The present invention further relates to a vinyl ether functional organopolysiloxane compound having the general formula: 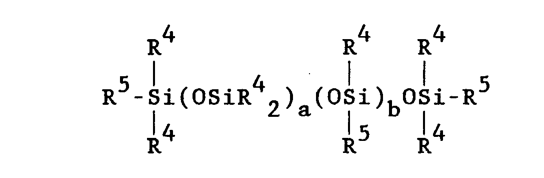
wherein R⁴ is a monovalent hydrocarbon or halohydrocarbon radical having from 1 to 20 carbon atoms, R⁵ is R⁴ or a monovalent hydrocarbon or halohydrocarbon radical containing at least one vinyl ether group, a has a value from 0 to 1000 and b has a value from 0 to 200, with the proviso that at least one vinyl ether group is present in the molecule. The monovalent hydrocarbon radicals of R⁴ include monovalent hydrocarbon or halohydrocarbon radicals as delineated above, including preferred examples. It is highly preferred that R⁴ be methyl. It is also preferred that R⁵ is a vinyl ether group having a formula of (a) -CH₂CH₂(OR⁶)_{c}OCH=CH₂ or (b) (H₂C=CHOR⁶)_{z}CR⁷_{4-z}(OR⁶) _{c}CH₂CH₂ wherein R⁶ is a divalent hydrocarbon or halohydrocarbon radical having from 1 to 20 carbon atoms, R⁷ is a monovalent hydrocarbon or halohydrocarbon radical having from 1 to 20 carbon atoms or hydrogen atom, c has a value of 1 to 3 and z has a value of 1 or 2. Divalent hydrocarbon radicals of R⁶ are exemplified by alkylene radicals, such as methylene, ethylene, trimethylene, 2- methyltrimethylene, pentamethylene, hexamethylene, 3-ethylhexamethylene, octamethylene, -CH₂(CH₃)CH-, -(CH₂)₄-, -CH₂CH(CH₃)CH₂- and -(CH₂)₁₈-; cycloalkylene radicals such as cyclohexylene; arylene radicals such as phenylene and combinations of divalent hydrocarbon radicals such as benzylene, i.e. -C₆H₄CH₂-.

Examples of divalent halohydrocarbon radicals as R⁶ include any divalent hydrocarbon radical wherein one or more hydrogen atoms have been replaced by halogen, such as fluorine, chlorine or bromine. Preferably divalent halo-hydrocarbon radicals have the formula -CH₂CH₂CₙF₂ₙCH₂CH₂- wherein n has a value of from 1 to 10 such as, for example, -CH₂CH₂CF₂CF₂CH₂CH₂-. Preferably R⁶ in formula (a) is an alkylene radical having from 6 to 8 carbon atoms, and it is highly preferred that R⁶ is selected from hexylene and cyclohexyldimethylene. Preferably R⁶ in formula (b) is methylene. The monovalent hydrocarbon radicals of R⁷ in formula (b) include those monovalent hydrocarbon or halohydrocarbon radicals delineated above, including preferred examples. It is highly preferred for this invention that R⁷ be methyl.

For the present invention, it is preferred that a have a value of from 15 to 90 and b have a value from 0.5 to 20. It is especially preferred that a have a value between 70 and 90 and b have a value between 5 and 15.

The present invention is further directed to a curable coating composition comprising (A) a vinyl ether functional polysiloxane compound and (B) a photocleavable acid. The vinyl ether functional polysiloxane compound is delineated above, including preferred embodiments thereof. It is preferred that from 95 to 99.5 weight percent of vinyl ether functional polysiloxane be used in the curable coating compositions of the invention, and it is highly preferred that from 97 to 99 weight percent be employed, said weight percent being based on the total weight of the composition. The photocleavable acid is also delineated above, including amounts and preferred embodiments thereof.

The curable coating composition of the present invention can further comprise (C), a reactive diluent. It is preferable for the present invention that the reactive diluent is an organic vinyl ether compound having the formula (CH=CHOR⁸)_{d}CR⁹_{4-d} wherein R⁸ is a divalent hydrocarbon or halohydrocarbon radical having from 1 to 20 carbon atoms, R⁹ is a monovalent hydrocarbon or halohydrocarbon radical having from 1 to 20 carbon atoms or hydrogen atom and d has a value of 1 to 3. The divalent hydrocarbon and halohydrocarbon radicals are as delineated above for the vinyl ether functional organopolysiloxane, including preferred embodiments thereof. The monovalent hydrocarbon radicals are as delineated above including preferred embodiments thereof.

An effective amount of reactive diluent is required for the compositions of the instant invention and this amount is from 0.1 to 10 percent by weight based on the total weight of the composition. It is highly preferred to use this diluent between 1 and 5 percent by weight based on the total composition.

The process and compositions of this invention are also applicable to adhesive materials other than pressure sensitive adhesives. Examples include foods, asphalt and gum polymers. The compositions of the present invention are useful as release coatings for pressure sensitive adhesives, as protective coatings and decorative coatings.

The compositions prepared in the method and process of this invention and the curable coating compositions of this invention, can contain any optional components such as photosensitizers, high release additives, reinforcing and extending fillers, hydrocarbons and halohydrocarbons free of aliphatic unsaturation, colorants, dyes, preservatives, fragrances, stabilizers, adhesion modifiers and adhesive-release modifiers. Preferably not more than 25% by weight of the total composition should be occupied by optional ingredients.

The method and process of this invention can be completed by mixing the materials described and any optional components in the order delineated, using any suitable mixing means, such as a spatula, a drum roller, a mechanical stirrer, a three-roll mill, a sigma blade mixer, a bread dough mixer and a two-roll mill. The coating method can be accomplished by any suitable manner known in the art, such as by spreading, brushing, extruding, spraying, gravure, kiss-roll and air-knife.

The following examples are disclosed to further teach the invention which is properly delineated by the appended claims. All amounts (parts and percentages) are by weight unless otherwise indicated.

### EXAMPLE I

To a 3-neck flask equipped with a stirrer, condenser, thermometer and heating mantle, was added 33.37g (grams) of a vinyl ether compound having the formula: 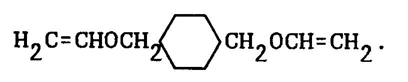
Next, 0.256 g of a platinum catalyst (a soluble platinum complex containing 0.67% platinum formed from chloroplatinic acid and divinyltetramethyldisiloxane), at 20 ppm, was added to the 3-neck flask and the mixture was heated to 60°C. Then, 50 g of a siloxane copolymer having the formula H(Me)₂Si(OSiMe₂)₉₅(OSiHMe)₃OSi(Me)₂H was added to the mixture slowly via an addition funnel and the mixture then exothermed to a temperature of 74°C. After addition of the siloxane copolymer was complete, heating of the mixture was continued at 60°C. until all of the SiH material had been consumed. Then, most of the excess vinyl ether was removed on a rotoevaporator at 150°C. and 0.4 - 0.5 kPa (3-4 mm) mercury. A straw colored product was obtained. The copolymer produced by this reaction had the following formula: R(Me)₂Si(OSiMe₂)₉₅(OSiMeR)₃OSi(Me)₂R wherein R is 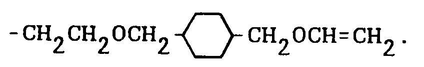
Next, 0.01 g of (C₁₂H₂₅Ph)₂I⁺SbF₆⁻ was added to 10 g of the resulting polymer and this mixed in with the polymer well and applied a thin film of the material, of 1 to 2 micrometers, onto a Mylar™ type A film and the film was then cured at greater than 152.4 m/min (500 ft/min.) when exposed to a single 11.8 Watt/mm (300W/inch) H bulb on a Fusion UV processor. The sample cured at 0.05 MJ/kg (0.5 MRads) of EB irradiation.

### EXAMPLE II

A composition was prepared as in Example I, however, instead using the vinyl ether compound of Example I, 137.53 g of a vinyl ether compound having the formula H₂C=CHOCH₂CH₂OCH₂CH₂OCH₂CH₂OCH=CH₂ was added to the 3-neck flask, 100 g of the siloxane copolymer of Example 1 was used and 0.42 g of a platinum catalyst (a soluble platinum complex containing 0.67% platinum formed from chloroplatinic acid and divinyltetramethyldisiloxane), at 11 ppm, was used as a catalyst. Again, most of the excess vinyl ether was removed on a rotoevaporator at 150°C. and 0.4-0.5 kPa (3-4 mm) mercury. A straw colored product was again obtained. The copolymer produced by this reaction had the following formula: R(Me)₂(OSiMe₂)₉₅(OSiMeR)₃OSi(Me)₂R wherein R is -CH₂CH₂OCH₂CH₂OCH₂CH₂OCH₂CH₂OCH=CH₂. Next, 0.01 g of (C₁₂H₂₅Ph)₂I⁺ SbF₆ was added to 10 g of the resulting copolymer and this mixture was stirred well and the resulting mixture was then applied in the form of a thin film of the material, of 1 to 2 micrometers, onto a Mylar™ type A film, and the film was then cured at greater than 152.4 m/min (500 ft/min.) when exposed to a single 11.8 Watt/mm (300W/inch) H bulb on a Fusion UV processor. The sample cured at 0.025 MJ/kg (2.5 MRads) of EB irradiation.

### EXAMPLE III

A composition of the present invention was again prepared as in Example I, except that 5 g of a siloxane copolymer having the formula H(Me)₂Si(OSiMe₂)₉₃(OSiMeH)₅OSiMe₂H and 4.605 g of the vinyl ether compound employed in Example 1 was utilized in the reaction. In this instance, the excess vinyl ether was not removed. A straw colored product was again obtained. The copolymer produced by this reaction had the following formula: R(Me)₂Si(OSiMe₂)₉₃(OSiMeR)₅OSi(Me)₂R wherein R is 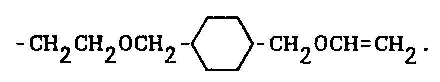
Next 0. 01 g of (C₁₂H₂₅Ph)₂I⁺SbF₆⁻ was added to 10 g of the resulting copolymer and this mixture was stirred well and the resulting mixture was then applied in the form of a thin film of the material, 1 to 2 micrometers, onto a Mylar™ type A film and the film cured at 56 mJ/cm² when exposed to a single 11.8 Watt/mm (300W/inch) H bulb on a Fusion UV processor. The sample cured at 0.025 MJ/kg (2.5 MRads) of EB irradiation.

### Example IV

A composition of the present invention was again prepared as in Example I, except that 75 g of a siloxane copolymer having the formula H(Me)₂Si(OSiMe₂)₈₈(OSiMeH)₁₀OSiMe₂H, 105.4 g of vinyl ether compound having the formula H₂C=CHOCH₂CH₂CH₂CH₂CH₂CH₂OCH=CH₂ and 0.28 g of a platinum catalyst (a soluble platinum complex containing 0.67% platinum formed from chloroplatinic acid and divinyltetramethyldisiloxane) were utilized in the reaction. The mixture was exothermed in this instance to a temperature of 69°C. After addition of the siloxane copolymer was complete, heating of the mixture was continued at 65°C. until all of the SiH material had been consumed. In this instance, the excess vinyl ether was not removed. The copolymer produced by this reaction had the following formula: R(Me)₂Si(OSiMe₂)₈₈(OSiMeR)₁₀OSi(Me)₂R wherein R is -CH₂CH₂OCH₂CH₂CH₂CH₂CH₂CH₂OCH=CH₂. Next 0.01 g of (C₁₂H₂₅Ph)₂I⁺SbF₆⁻ was added to 10 g of the resulting copolymer and this mixture was stirred well and the resulting mixture was then applied in the form of a thin film of the material, of 2 micrometers, onto a Mylar™ type A film and the film cured at 35 mJ/cm² when exposed to a single 11.8 Watt/mm (300W/inch) H bulb on a Fusion UV processor. The sample cured at 0.01 MJ/kg (1.0 MRads) of EB irradiation.

### Example V

A composition of the present invention was again prepared as in Example IV, except that 70.86 g of a vinyl ether compound having the formula H₂C=CHOCH₂CH₂OCH=CH₂ and 0.28 g of a platinum catalyst (a soluble platinum complex containing 0.67% platinum formed from chloroplatinic acid and divinyltetramethyldisiloxane) were utilized in the reaction. The mixture was exothermed in this instance to a temperature of 69°C. After addition of the SiH functional polymer was complete, heating of the mixture was continued at 65C until all of the SiH material had been consumed. The excess vinyl ether was removed. The copolymer produced by this reaction had the following formula: R(Me)₂Si(OSiMe₂)₈₈(OSiMeR)₁₀OSi(Me)₂R wherein R is -CH₂CH₂OCH₂CH₂OCH=CH₂. Next 0.01 g of (C₁₂H₂₅Ph)₂I⁺ SbF₆⁻ was added to 10 g of the resulting copolymer and this mixture was stirred well and the resulting mixture was then applied in the form of a thin film of the material, of 2 micrometers, onto a Mylar™ type A film and the film cured at 220 mJ/cm² when exposed to a single 11.8 Watt/mm (300W/inch) H bulb on a Fusion UV processor. The sample cured at 0.03 MJ/kg (3.0 MRads) of EB irradiation.

### EXAMPLE VI

A composition of the present invention was again prepared as in Example V, except that 5 g of a siloxane copolymer having the formula H(Me)₂Si(OSiMe₂)₉₃(OSiMeH)₅OSiMe₂H, 101.2 g of a vinyl ether compound having the formula: 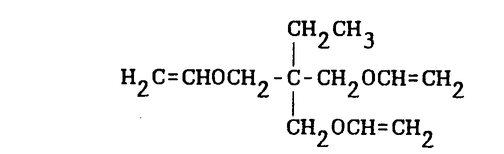
and 0.464 g of a platinum catalyst (a soluble platinum complex containing 0.67% platinum formed from chloroplatinic acid and divinyltetramethyldisiloxane) were utilized in the reaction. The mixture exothermed in this instance to a temperature of 69°C. After addition of the SiH functional polymer was complete, heating of the mixture was continued at 65°C. until all of the SiH material had been consumed. The excess vinyl ether was removed. The copolymer produced by this reaction had the following formula: R(Me)₂Si(OSiMe₂)₉₃(OSiMeR)₅OSi(Me)₂R wherein R is 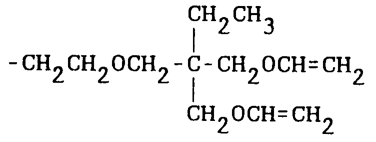
Next 0.01 g of (C₁₂H₂₅Ph)₂I⁺SbF₆⁻ was added to 10 g of the resulting copolymer and this mixture was stirred well and the resulting mixture was then applied in the form of a thin film of the material, of 2 micrometers, onto a Mylar™ type A film and the film cured at 50 mJ/cm² when exposed to a single 11.8 Watt/mm (300W/inch) H bulb on a Fusion UV processor. The sample cured at 0.015 MJ/kg (1.5 MRads) of EB irradiation. Next, 5 weight percent of an organic vinyl ether compound having the formula 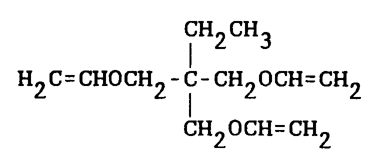
was added to the copolymer. Next 2.0 weight percent of (C₁₂H₂₅Ph)₂I⁺SbF₆⁻ was added to 10 g of the resulting mixture and this mixture was stirred well and the resulting mixture was then applied in the form of a thin film of the material, of 2 micrometers, onto a Mylar™ type A film and the film cured at less than 30 mJ/cm² when exposed to a single 11.8 Watt/mm (300W/inch) H bulb on a Fusion UV processor. The sample cured at 0.01 MJ/kg (1.0 MRads) of EB irradiation.

## Claims

1. A method of making a vinyl ether functional siloxane, the method comprising:
(I) mixing
(A) a silicon compound selected from (i) silanes and( ii) siloxanes;
(B) a vinyl ether compound selected from (a) H₂C=CHOROCH=CH₂, (b) (H₂C=CHOR)ₓCR¹₄₋ₓ and (c) a mixture thereof; and
(C) a hydrosilylation catalyst wherein R is a divalent hydrocarbon or halohydrocarbon radical having from 1 to 20 carbon atoms, R¹ is a monovalent hydrocarbon orhalo-hydrocarbon radical having from 1 to 20 carbon atoms or hydrogen, x has a value of 3 or 4 and the silane and siloxane eachcontain at least one silicon bonded hydrogen radical in a molecule and, wherein the molar ratio of CH₂=CHO- containing molecules to silicon bonded hydrogen atoms is greater than 1.0.

2. A method according to claim 1 further comprising heating the mixture.

3. A method according to claims 1 or 2 further comprising stripping off excess organic vinyl ether.

4. A method according to claim 1 wherein R in (a) is an alkylene radical having from 6 to 8 carbon atoms, R in (b) is methylene and R¹ is methyl.

5. A method according to claim 4 wherein R in (a) is selected from hexylene and cyclohexyldimethylene.

6. A method according to claim 1 wherein the silane has the formula (R²O)_{y}SiR³_{4-y} wherein R² is a monovalent hydrocarbon or halohydrocarbon radical having from 1 to 8 carbon atoms, R³ is hydrogen atom or R² and y has a value from 1 to 3.

7. A method according to claim 6 wherein R² is selected from methyl, phenyl, vinyl and 5-hexenyl.

8. A method according to claim 1 wherein the siloxane is an organohydrogenpolysiloxane.

9. A method according to claim 8 wherein the organohydrogenpolysiloxane has the formula YMe₂SiO(Me₂SiO)ₚ(MeYSiO)_{q}SiMe₂Y, wherein Y denotes a hydrogen atom or a methyl radical, Me denotes a methyl radical, p and q each have values of zero or an integer of 1 or more, the sum of p plus q having a value sufficient to provide a viscosity at 25°C. of from 1 to 100 millipascal-seconds with the proviso that an average of at least two Y radicals per molecule are hydrogen atoms.

10. A method according to claim 1 wherein the hydrosilylation catalyst is a platinum containing catalyst.

11. A method according to claim 6 wherein the platinum containing catalyst is a vinyl-siloxane complex of chloroplatinic acid.

12. A method of making a curable coating composition, the method comprising:
(I) preparing the vinyl ether functional siloxane of claim 1;
(II) adding a photocleavable acid;
(III) applying the mixture from (II) to a solid substrate to form a coating; and
(IV) exposing the coating to an energy source selected from (i) actinic radiation and (ii) actinic radiation in combination with heat in an amount sufficient to cure the coating.

13. A process according to claim 12 wherein the photocleavable acid is an onium salt selected from R₂I⁺MXₙ⁻, R₃S⁺MXₙ⁻, R₃Se⁺MXₙ⁻, R₄P⁺MXₙ⁻ and R₄N⁺MXₙ⁻, wherein each R is, independently an organic radical having from 1 to 30 carbon atoms and MXₙ- is a non-basic, non- nucleophilic anion.

14. A process according to claim 13 wherein the non-basic, non-nucleophilic anion is selected from BF₄⁻, PF₆⁻ , AsF₆⁻, SbF₆⁻, SbCl₆⁻, HSO₄⁻, ClO₄⁻, FeCl₄⁻, SnCl₆⁻ and BiCl₅⁻.

15. A process according to claim 13 wherein the onium salt is selected from bis(dodecylphenyl) iodonium hexafluoroarsenate, bis(dodecylphenyl) iodonium hexafluoro-antimonate and dialkylphenyl iodonium hexafluoroantimonate.

16. A process according to claim 12 wherein the photocleavable acid is a nitrobenzyl sulfonate ester having the general formula 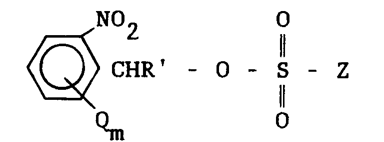 wherein Z is selected from alkyl groups, aryl groups, alkylaryl groups, halogen substituted alkyl groups, halogen substituted aryl groups, halogen substituted alkylaryl groups, nitro substituted aryl groups, nitro substituted alkylaryl groups, aryl groups having nitro and halogen substituents, alkylaryl groups having nitro and halogen substituents and a group having the formula C₆H₄SO₃CHR'C₆H₄₋ₘQₘ(NO)₂, R' is selected from hydrogen atom, methyl and nitro substituted aryl groups, each Q is independently selected from hydrocarbon groups, hydrocarbonoxy groups, NO₂, halogen atoms and organosilicon compounds, m has a value of 0, 1 or 2, with the proviso that Q is not an acidic group.

17. A process according to claim 12 further comprising releasably adhering a pressure sensitive adhesive composition to the cured applied coating.

18. A compound having the general formula 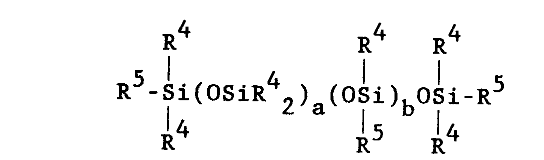 wherein R⁴ is a monovalent hydrocarbon or halohydrocarbon radical having from 1 to 20 carbon atoms, R⁵ is R⁴ or is a group having its formula selected from (a) -CH₂CH₂(OR⁶)_{c}OCH=CH₂ or (b) (H₂C=CHOR⁶)_{z}CR⁷ _{4-z}(OR⁶)_{c}CH₂CH₂ wherein R⁶ is a divalent hydrocarbon or halohydrocarbon radical having from 1 to 20 carbon atoms, R⁷ is a monovalent hydrocarbon or halohydrocarbon radical having from 1 to 20 carbon atoms or hydrogen atom, c has a value of 1 to 3 and z has a value of 1 or 2, a has a value from 0 to 1000 and b has a value from 0 to 200, with the proviso that at least one group having its formula selected from (a) -CH₂CH₂(OR⁶)_{c}OCH=CH₂ or (b) (H₂C=CHOR⁶)_{z}CR⁷_{4-z}(OR⁶)_{c}CH₂CH₂ is present in the compound.

19. A coating composition comprising the compound of claim 18 and (B) a photocleavable acid.

20. A composition according to claim 19 wherein the composition further comprises (C) a reactive diluent.

21. A composition according to claim 20 wherein the reactive diluent is an organic vinyl ether compound having the formula (CH=CHOR⁸)_{d}CR⁹_{4-d} wherein R⁸ is a divalent hydrocarbon or halohydrocarbon radical having from 1 to 20 carbon atoms, R⁹ is a monovalent hydrocarbon or halohydrocarbon radical having from 1 to 20 carbon atoms or hydrogen atom and d has a value of 1 to 3.
